# EUROPÄISCHE PATENTSCHRIFT

(11) **EP 0 777 526 B1**
(45) Veröffentlichungstag und Bekanntmachung des Hinweises auf die Patenterteilung: **07.01.1999**
(21) Anmeldenummer: 95929062.8
(22) Anmeldetag: 02.08.1995
(51) Int. Cl.: B01J 20/26, B01D 53/66, C02F 1/78

(54) **FILTERMATERIAL UND VERFAHREN ZUR ENTFERNUNG VON OZON AUS GASEN UND FLÜSSIGKEITEN**
FILTER MATERIAL AND PROCESS FOR REMOVING OZONE FROM GASES AND LIQUIDS
MATERIAU DE FILTRAGE ET PROCEDE D'ELIMINATION DE L'OZONE CONTENU DANS DES GAZ ET DES LIQUIDES

(30) Priorität: 17.08.1994 DE 4429165
(43) Veröffentlichungstag der Anmeldung: 11.06.1997
(73) Patentinhaber: Ticona GmbH, 65451 Kelsterbach (DE)
(72) Erfinder: VON EYSMONDT, Jörg, D-65719 Hofheim (DE); OSAN, Frank, D-65779 Kelkheim (DE); SCHLEICHER, Andreas, D-65614 Beselich (DE)
(86) Internationale Anmeldenummer: EP9503081
(87) Internationale Veröffentlichungsnummer: WO9604988

(56) Entgegenhaltungen:
- FR-A- 1 161 824
- GB-A- 1 214 493
- GB-A- 1 532 227
- DATABASE WPI Week 7521 Derwent Publications Ltd., London, GB; AN 75-34838W & JP,A,49 087 334 (CANON) , 21.August 1974

## Beschreibung

Die Erfindung bezieht sich auf ein Filtermaterial sowie ein Verfahren zur Entfernung von Ozon aus Gasen und Flüssigkeiten, bei welchem ein Gasstrom oder eine Flüssigkeit mit einem Filtermaterial aus ungesättigten Cycloolefinhomo- oder copolymeren in Kontakt gebracht wird.

Es ist bekannt, daß bei elektrophotographischen Kopier- und Druckverfahren kleine Mengen von Ozon gebildet werden. Das entstehende Ozon wird von den verwendeten Geräten, beispielsweise Fotokopierer oder Laserdrucker, permanent in die Umgebungsluft abgegeben. Ozon belästigt nicht nur durch seinen Geruch, sonder wirkt auch in geringen Konzentrationen gesundheitsschädlich. Um hier Abhilfe zu schaffen, sind eine Vielzahl von Verfahren entwickelt worden, die die Entfernung des Ozons aus dem von derartigen Vorrichtungen freigesetzten Luftstrom beschreiben. Dabei wird das Ozon entweder zerstört oder chemisch oder physikalisch gebunden.

Bekannt ist die Zerstörung des Ozons durch Erhitzen oder durch Wechselwirkung mit einem Metallkatalysator (vgl. JP-60 197 223 und JP-60 19 115]. Nachteilig sind bei der thermischen Zerstörung des Ozons allerdings der Energiebedarf und die hohe Temperatur, die zur vollständigen Ozonzersetzung notwendig sind.

Ferner ist bekannt, den Gasstrom durch ein Filter zu leiten, in dem das Ozon katalytisch zersetzt wird (vgl. JP-58 081 425). Das Basismaterial des Filters ist mit einer oder mehreren Metallverbindungen, Metallen oder Legierungen, beispielsweise Eisen-, Mangan- oder Nickelverbindungen imprägniert, denen weiterhin eine Verbindung oder ein Metall aus der Gruppe der Edelmetalle, beispielsweise Palladium oder Platin, zugegeben wird. Diese Katalysatoren sind sehr teuer und haben meist nur eine begrenzte Lebensdauer, da solche heterogenen Katalysatoren durch verschiedene Katalysatorgifte schnell desaktiviert werden.

Bekannt ist auch ein Filter bestehend aus einem Trägermaterial aus Aluminiumoxid oder Aktivkohle, das mit ethylenisch ungesättigten Verbindungen imprägniert ist, die mit dem Ozon reagieren, (vgl. DE 37 28 802). Nachteilig ist, daß die Verbindungen, beispielsweise Terpene, je nach Trägermaterial in vielen Fällen flüchtig sind, also in geringen Mengen ausgetragen werden können und somit verloren gehen. Außerdem steht nur ein geringer Teil des Filtergewichtes als aktiver Bestandteil zur Verfügung.

Weiterhin ist ein Filter zur Ozonzersetzung bekannt, das aus einer Faserplatte besteht, deren Fasern einen ozonzersetzenden Katalysator enthalten (vgl. JP-03 270 718). Diese Fasern, die in einer bevorzugten Ausführungsform porös sind, bestehen aus einem Polymer mit einer der folgenden funktionellen Gruppen, die mit Ozon stark reagieren, z. B. -SH, =S, -NH₂, =NH, -CN und -OH. Als ozonzersetzende Katalysatoren werden Metalle wie Gold, Silber, Kupfer, Palladium, Eisen, Nickel, Kobalt und Mangan oder ihre Oxide sowie Tonerde und Kieselgur genannt Die für die Herstellung des Filters benötigte Faser wird nach einem üblichen Spinnprozeß erhalten, wobei der Katalysator in der Spinnlösung dispergiert und nach dem Spinnen gleichmäig in der Faser verteilt ist. Durch Zugabe eines zweiten Polymers, das mit dem ersten Polymer eine Phasentrennung hervorruft, und verschiedene Nachbehandlungen des Spinnproduktes erhält man eine poröse Phase, in der die Katalysatorpartikel enthalten sind. Die erhaltenen Fasern werden dann nach üblichen Methoden zu dem Filter konfektioniert. Abgesehen davon, da die als geeignet angesehenen Polymeren nur en bloc genannt werden - offenbart ist ausschließlich Polyacrylnitril - ist die Herstellung der Filter umständlich und sehr aufwendig.

Aufgabe der Erfindung war es daher, ein Filter und ein Verfahren zur Ozonentfernung zur Verfügung zu stellen, bei denen die genannten Nachteile nicht auftreten.

Die Erfindung betrifft ein Filtermaterial zur Entfernung von Ozon aus Gasen und Flüssigkeiten, dadurch gekennzeichnet, daß das Filtermaterial ein ungesättigtes Cycloolefinhomopolymer oder -copolymer enthält.

Die Erfindung betrifft auch ein Verfahren zur Entfernung von Ozon aus Gasen, bei welchem ein Filtermaterial das ein ungesättigtes Cycloolefinhomo- oder copolymer mit wiederkehrenden Einheiten auf Basis der Verbindungen der Formeln (I), (II) oder (III) enthält, eingesetzt wird, wobei das Gas oder die Flüssigkeit mit der Oberfläche des Filtermaterials in Kontakt gebracht wird.

Das Filtermaterial zur Entfernung von Ozon aus Gasen und Flüssigkeiten besteht bevorzugt aus einem ungesättigten Cycloolefinpolymer oder -copolymer mit wiederkehrenden Einheiten auf der Basis von Verbindungen der Formeln (I), (II) oder (III) 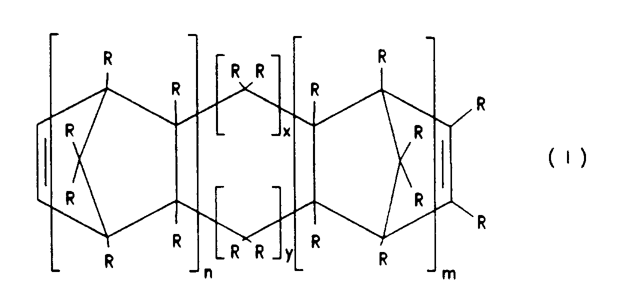 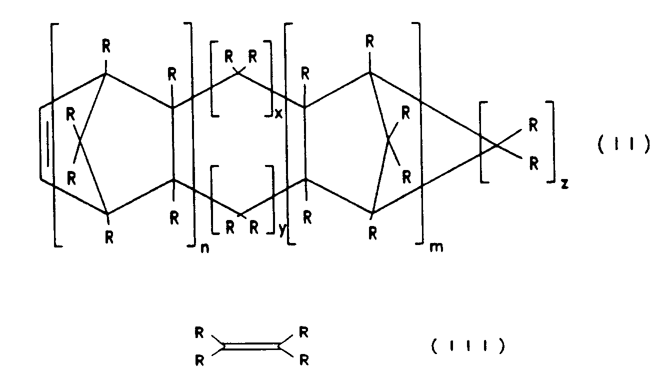 worin die Reste R unabhängig voneinander Wasserstoffatome, Halogenatome, C₁-C₂₀-Alkylgruppen, C₂-C₂₀-Alkenylgruppen oder C₆-6₂₀-Arylgruppen bedeuten und n, m, x, y und z gleich oder verschieden sind und 0, 1, 2, 3, 4 oder 5 sind.

Wird kein Diolefin der Formel I eingesetzt, ist mindestens eines der Monomere der Formeln II bis III mit einem ungesättigtem (olefinischem) Rest substituiert, wobei dieser Rest mit der Grundstruktur oder sich selbst einen oder mehrere Ringe bilden kann. Zwei Reste R können Ringe bilden, die gesättigt oder ungesättigt sein können. Zwei Reste R, welche sich am gleichen C-Atom befinden, können eine Doppelbindung (= CR'R'') bedeuten, welche ihrerseits durch Reste R substituiert ist (z.B. Ethylidennorbornen).

Als Cycloolefin bevorzugt werden Norbornen und dessen höhere Homologe (z.B. Tetracyclododecen), sowie deren Derivate. Diese sind durch Diels-Alder-Reaktion zugänglich. Besonders bevorzugt sind Norbornen und Tetracyclododecen.

Als Diolefine besonders bevorzugt sind Norbornadien, Dicyclopentadien, 5-Ethylidennorbornen-2 und 5-iso-Propenylnorbornen-2.

Bevorzugte acyclische Olefine sind Ethylen und Propylen. Bevorzugte Comonomer-Kombinationen sind in der Tabelle 1 aufgelistet:

| Variante | Cyclische Diolefine | Cycloolefine | Acyclische Diolefine | Acyclische Olefine |
|---|---|---|---|---|
| 1 (bevorzugt) | X | | | |
| 2 (bevorzugt) | X | | | X |
| 3 (bevorzugt) | X | X | | |
| 4 (bevorzugt) | X | X | | X |
| 5 | | X | X | |
| 6 | | X | X | X |
| Bevorzugte Monomere | Norbornadien 5-Vinylnorbornen 5-Ethylidennorbornen 5-iso-Propenylnorbornen Dicyclopentadien 3-, 4-, 5-Vinylcyclohexan | Norbornen 5-Methylnorbornen Tetracyclododecen Cyclopenten | 1,4- und 1,5-Hexadien Butadien | Ethylen Propylen Buten Styrol |

Das Polymer besteht zu 0,1 bis 100 Gew.-% bezogen auf die Gesamtmenge der Monomeren (bevorzugt 20 bis 95 Gew.-%, besonders bevorzugt 50 bis 90 Gew.-%, insbesondere bevorzugt 70 bis 85 Gew.-%), mindestens aus einem Monomer der Formel I und II, wobei cyclische Diolefine bevorzugt werden und 0 bis 99,9 Gew.-% aus einem Monomer der Formel III.

Die ungesättigten Cycloolefincopolymere werden hergestellt durch Polymerisation von cyclischen oder acyclischen Diolefinen, wobei acyclische Diolefine mit Cycloolefinen copolymerisiert werden müssen, cyclische Diolefine können mit Cycloolefinen copolymerisiert werden. In beiden Varianten kann darüberhinaus mit acyclischen Olefinen copolymerisiert werden. Wichtig ist eine Glastemperatur oberhalb Raumtemperatur, bevorzugt über 70°C, besonders bevorzugt über 100°C.

Zur Polymerisation können Übergangsmetalle als Katalysator verwendet werden. Titan- und Palladiumkatalysatoren sind besonders geeignet.

### Polymerisationsbeispiel 1

Ein sauberer und trockener 1,5 dm³-Polymerisationsreaktor mit Rührer wurde mit Stickstoff gespült und dann mit einer Lösung von 258 g Norbornadien in 300 cm³ Toluol gefüllt. Unter Rühren wurde dann der Reaktor auf eine Temperatur von 90°C gebracht. Danach wurden 20 cm³ toluolische Methylalumoxanlösung (10 Gew.-% Methylalumoxan mit einer Molmasse von 1300 g/mol nach kryoskopischer Bestimmung) in den Reaktor dosiert und die Mischung 15 min bei 90°C gerührt. Parallel dazu wurden 5,2 mg Isopropyliden(cyclopentadienyl)(1-indenyl)zirkoniumdichlorid in 20 cm³ toluolischer Methylalumoxanlösung gelöst und durch 15 minütiges Stehenlassen voraktiviert. Dann wurde die Lösung des Komplexes in den Reaktor dosiert. Unter Rühren (750 UPM) wurde dann 2 Stunden bei 90°C polymerisiert. Dann wurde der Reaktorinhalt schnell in ein Rührgefäß abgelassen, in dem 5 cm³ Isopropanol vorgelegt waren. Diese Mischung wurde mit 2 dm³ Aceton versetzt, 10 min gerührt und dann der suspendierte Feststoff abfiltriert. Das abfiltrierte Polymer wurde dann in 300 cm³ einer Mischung aus zwei Teilen einer 1-normalen Salzsäure und einem Teil Ethanol gegeben und diese Suspension 2 Stunden gerührt. Das Polymer wurde dann erneut filtriert, mit Wasser gewaschen und bei 60°C und 0,2 bar 15 Stunden getrocknet. Es wurde eine Produktmenge von 2,9 g erhalten. Das polymere Produkt wies weder nach DSC-Messung noch bei mikroskopischer Untersuchung eine Erweichungstemperatur unterhalb der Zersetzungstemperatur auf (ca. 200°C). Die Jodzahl betrug 159 g Jod/100 g.

### Polymerisationsbeispiel 2

Beispiel 1 wurde wiederholt, jedoch wurde als Metallocen 5,5 mg 4-Cyyclopentadienyl-4,7,7-trimethyl-tetrahydroindenyl-zirkondichlorid verwendet. Es wurden 4,6 g Polymer erhalten. Das polymere Produkt wies weder nach DSC-Messung noch bei mikroskopischer Untersuchung eine Erweichungstemperatur unterhalb der Zersetzungstemperatur auf (ca. 200°C). Die Jodzahl betrug 203 g Jod/100 g.

Zur Herstellung eines Filters können die Polymere als Pulver, Fasern, Folien oder andere Formkörper eingesetzt werden. Durch geeignete Verfahren lassen sich Filter auch mit besonders großer Oberfläche herstellen, beispielsweise mit Gitter- oder Wabenstruktur. Die zu verwendenden Pulver besitzen handelsübliche Teilengrößen, wobei auch Granulate verwendbar sind. Wichtig hierbei ist es, daß das zu behandelnde Gas oder die Flüssigkeit durch das Pulver, beispielsweise in Form eines Festbettes, ohne Störung durchgeleitet werden kann. Werden die Polymere als Fasern verwendet, werden diese als Stapelfasern, Nadelfilz, "non woven" Material, Kardenband oder Gewebe eingesetzt. Auch Folien oder Folienschnipsel können in geeigneter Form Verwendung finden.

Der ozonhaltige Gasstrom oder die Flüssigkeit kann bei jeder Temperatur, die unterhalb des Erweichungspunktes der Polymeren liegt, mit dem Filtermaterial gemäß der Erfindung behandelt werden. Im allgemeinen liegt die Temperatur im Bereich von -10 bis +80°C, vorzugsweise 0 bis 50°C.

Die Entfernung des Ozons erfolgt im allgemeinen quantitativ, wobei die Reaktionszeiten von der Strömungsgeschwindigkeit des zu behandelnden Mediums und der Oberfläche des Filterguts und/oder der Schütthöhe bei Pulvern abhängig ist. Im allgemeinen beträgt die Verweilzeit im Filter 0,1 Sekunden bis 10 Minuten, vorzugsweise 0,5 Sekunden bis 1 Minute. Die Grenzwerte können aber auch überschritten werden. Bei der Entfernung des Ozons aus dem Gas- oder Flüssigkeitsstrom werden keine flüchtigen Produkte gebildet.

Das Filtermaterial auf Basis von ungesättigter Cycloolefinhomo- oder copolymerer kann im allgemeinen als unverschnittenes Material eingesetzt werden. Möglich ist aber auch der Zusatz von üblichen Füllstoffen, wie Kreide, Talk, Ton, Glimmer, und/oder faserförmigen Verstärkungsmitteln, wie Glas- und Kohlenstoffasern, Whiskers, sowie weiteren üblichen Zusatzstoffen und Verarbeitungshilfsmitteln, beispielsweise Gleitmitteln, Trennmitteln, Antioxidantien, UV-Stabilisatoren.

Das Filter gemäß der Erfindung kann bei allen ozonhaltigen Gasströmen und Flüssigkeiten verwendet werden. So findet es beispielsweise Anwendung bei der Beseitigung des bei der Sterilisation verwendeten oder aus einem Kopiergerät entstandenen Ozons, ferner zur Entfernung und Unschädlichmachung von Ozon in Flüssigkeiten.

### Beispiele

Das in den Beispielen als Ausgangsstoff benötigte Ozon wurde in einem handelsüblichen Ozonerzeuger hergestellt, der mit reinem Sauerstoff gespeist wurde.

Die Ozonkonzentration wurde mit einem Meßgerät APOA 350E der Firma Horiba (Industriestr. 9, D-61449 Steinbach) auf UV-Photometerbasis bestimmt. Anschließend wurde das Ozon-Sauerstoff-Gemisch mit Luft oder Argon bis zu den genannten Konzentrationen verdünnt. Da bekannt ist, daß sich Ozon in Wasser und in feuchten Gasen langsam zersetzt, wurden die zur Verdünnung eingesetzten Gase getrocknet. Nach der Verdünnung wurde der Gasstrom geteilt. Ein Teil wurde durch ein Leerrohr, ein anderer durch ein entsprechendes, mit dem Filtermaterial gefülltes vertikales Rohr geleitet. Um das Polymer aufnehmen zu können, war das Glasrohr am unteren Ende mit einer porösen Glasplatte (Fritte) verschlossen. Die Strömungsgeschindigkeiten wurden so reguliert, daß pro Zeiteinheit gleiche Volumina durch die beiden Rohre strömten.

In ein Glasrohr mit einem Durchmesser von ca. 25 mm, das am unteren Ende mit einer Glasfritte verschlossen war, wurden verschiedene Mengen des Polymers gemäß Polymerisationsbeispiel 1 eingefüllt. Durch dieses Pulverbett wurde der ozonhaltige Gasstrom geleitet. Dabei wurden nacheinander die Strömungsgeschwindigkeiten und die Ozonkonzentration eingestellt. Gemessen wurde über den jeweils in der Tabelle angegebenen Zeitraum.

**Tabelle 2**

| Vol. Strom [l/h] | Zeit (h) | Einwaage [g] | Ozonkonzentration (mg/m³) | Ozonkonzentration nach Filter (mg/m³) |
|---|---|---|---|---|
| 50 | 2 | 0,9 | 0,2 | -¹⁾ |
| 110 | 24 | 1,2 | 0,66 | - |
| 110* | 24* | 1,2* | 0,50* | - |

| | | | | |
|---|---|---|---|---|
| ¹⁾ nicht nachweisbar | | | | |

## Patentansprüche

1. Filtermaterial zur Entfernung von Ozon aus Gasen und Flüssigkeiten, dadurch gekennzeichnet, daß das Filtermaterial ein ungesättigtes Cycloolefinhomopolymer oder -copolymer enthält.

2. Filtermaterial nach Anspruch 1, dadurch gekennzeichnet, daß das Cycloolefinhomopolymer oder -copolymer eine mittlere Molmasse Mw von 2000 bis 2 000 000 hat.

3. Verfahren zur Entfernung von Ozon aus Gasen und Flüssigkeiten, dadurch gekennzeichnet, daß das Gas oder die Flüssigkeit mit einem ungesättigten Cycloolefinhomopolymer oder -copolymer in Kontakt gebracht wird.

4. Verfahren nach Anspruch 3, dadurch gekennzeichnet, daß die Kontakttemperatur -10 bis +80°C beträgt.

5. Verfahren nach Anspruch 3, dadurch gekennzeichnet, daß die Kontaktzeit 0,1 Sekunden bis 10 Minuten beträgt.

6. Verwendung des Filtermaterials nach Anspruch 1 oder 2 zur Herstellung eines ozonentfernenden Filters für Gase und Flüssigkeiten.

7. Verwendung nach Anspruch 6 in Form von Pulvern, Fasern, Folien oder Formkörpern.

## Claims

1. A filter material for removing ozone from gases and liquids which comprises an unsaturated cycloolefin homopolymer or cycloolefin copolymer.

2. The filter material as claimed in claim 1, wherein the cycloolefin homopolymer or cycloolefin copolymer has an average molar mass Mw of 2000 to 2,000,000.

3. A process for removing ozone from gases and liquids, which comprises bringing the gas or the liquid into contact with an unsaturated cycloolefin homopolymer or cycloolefin copolymer.

4. The process as claimed in claim 3, wherein the contact temperature is -10 to +80°C.

5. The process as claimed in claim 3, wherein the contact time is 0.1 second to 10 minutes.

6. The use of the filter material as claimed in claim 1 or 2 for producing an ozone-removing filter for gases and liquids.

7. The use as claimed in claim 6 in the form of powders, fibers, films or shaped bodies.

## Revendications

1. Matériau filtrant pour l'élimination de l'ozone des gaz et des liquides, caractérisé en ce que le matériau filtrant contient un homopolymère ou un copolymère de cyclooléfine insaturé.

2. Matériau filtrant suivant la revendication 1, caractérisé en ce que l'homopolymère ou le copolymère de cyclooléfine insaturé possède une masse molaire moyenne Mw de 2000 à 2 000 000.

3. Procédé d'élimination de l'ozone des gaz et des liquides, caractérisé en ce que le gaz ou le liquide est mis en contact avec un homopolymère ou un copolymère de cyclooléfine insaturé.

4. Procédé suivant la revendication 3, caractérisé en ce que la température de contact va de -10 à +80°C.

5. Procédé suivant la revendication 3, caractérisé en ce que le temps de contact va de 0,1 seconde à 10 minutes.

6. Utilisation du matériau filtrant suivant la revendication 1 ou 2, pour la préparation d'un filtre éliminant l'ozone pour les gaz et les liquides.

7. Utilisation suivant la revendication 6, sous forme de poudres, de fibres, de feuilles ou de pièces façonnées.
